Europäisches Patentamt

European Patent Office

Office européen des brevets

(19)

(11) Publication number: **0 024 731**
**B1**

(12) **EUROPEAN PATENT SPECIFICATION**

(45) Date of publication of patent specification: **07.09.83**

(51) Int. Cl.³: **A 23 L 1/27,** C 09 B 61/00,
A 23 L 2/00

(21) Application number: **80105120.2**

(22) Date of filing: **28.08.80**

(54) A photostable anthocyanic colorant composition and its use in a food composition.

(30) Priority: **30.08.79 US 70971**

(43) Date of publication of application:
**11.03.81 Bulletin 81/10**

(45) Publication of the grant of the patent:
**07.09.83 Bulletin 83/36**

(84) Designated Contracting States:
**CH DE FR GB IT LI**

(56) References cited:
**EP - A - 0 004 681**
**US - A - 3 266 903**
**US - A - 4 172 902**

The file contains technical information
submitted after the application was filed and not
included in this specification

(73) Proprietor: **THE COCA-COLA COMPANY**
**310 North Avenue**
**Atlanta Georgia 30301 (US)**

(72) Inventor: **Iacobucci, Guillermo A.**
**2325 Briacliff Road**
**Atlanta, GA 30329 (US)**
Inventor: **Sweeny, James S.**
**2484 Old Field Road, N.W.**
**Atlanta, GA 30327 (US)**

(74) Representative: **Abitz, Walter, Dr.-Ing. et al,**
**Abitz, Morf, Gritschneder P.O. Box 86 01 09**
**D-8000 München 86 (DE)**

A photostable anthocyanic colorant composition, and its use in a food composition

Background of the invention

The present invention relates generally to a photostable anthocyanic colorant composition consisting of an anthocyanic pigment in combination with a photoprotective agent. The invention also relates to the use of such compositions together with a food base.

Anthocyanic pigments, i.e. anthocyanins and anthocyanidins, have been found to account for the natural colors of many fruits, vegetables and flowers. Despite their widespread occurrence in nature, however, these pigments have not been widely used as colorants in foods because of both limited availability and, in many cases, poor stability and resultant color loss.

US—A—3 266 903 discloses the use of special flavylium compounds (anthocyanins) for coloring a food in an acidic condition.

The instability of anthocyanins in food systems has been studied extensively [Markakis, *Food Technology*, 4, 437 (1974); Hrazdina, *Lebersmith-Wiss. U. Technol.*, 7, 193 (1974)]. Anthocyanic pigments appear to be unstable in aqueous solutions at pH's above 4, at high temperature or in the presence of $H_2O_2$ or ascorbic acid. In addition, although anthocyanic pigments are stable under normal laboratory lighting conditions, direct exposure to sunlight causes extensive degradation and resultant color loss. [Van Buren, et al., *Am. J. Enol. & Vitic.*, 19, 147 (1968)].

Obviously, a process for stabilizing anthocyanic pigments in food products would greatly expand the potential utility of such pigments especially in products which cannot be constantly maintained at low temperatures in the dark. Nevertheless, such a process has not been developed, perhaps due to a lack of understanding of the mechanisms of photodegradation. Only the mechanism involved in decoloration by increasing pH apears to have been determined. [Brouillard and Dubois, *J. Am. Chem. Soc.*, 99, 1359 (1977); Brouillard and Delaportes, *J. Am. Chem. Soc.*, 99, 8461 (1977)].

It has long been known [Robinson and Robinson, *Biochem. J.*, 25, 1687 (1931)] that the various red to blue shades of flowers are due to anthocyanins either alone or in association with phenolic materials, called "co-pigments", which are present in the plants along with the anthocyanins. These co-pigments are known to cause a bathochromic shift in the $\lambda_{max}$ of the anthocyanin pigment and also an increase in the absorbance at $\lambda_{max}$. Several phenolic compounds have been shown to give this "co-pigment effect" in model systems. [Asen, et al., *Phytochem.*, 11, 1139 (1972); Scheffeldt and Hrazdina, *J. Food Sci.*, 43, 517 (1978)]. This co-pigment effect appears to be at its greatest when the co-pigment is a flavonol, and the use of flavonol co-pigments, such as rutin and kaempferol-3-glucoside, has been suggested as a way to enhance the hue and intensity of anthocyanin colorants in foods [see Scheffeldt and Hrazdina, above]. The use of non-flavanoid compounds as co-pigments, however, does not appear to have been shown or suggested previously.

In order to determine the "co-pigment effect" of various compounds, both naturally occurring and synthetic, a 10 ppm solution of the representative anthocyanin, cyanidin rutinoside, in 0.01 M citric acid was combined with the compounds, and in the amounts, shown in Table I.

Both the $\lambda_{max}$ and the absorbance at $\lambda_{max}$ were measured for each mixture using a Beckman Model 25 UV-visible spectrophotometer and quartz cells. Absorbance readings were normalized according to the formula: Abs=[Abs w/copigment]/[Abs w.o. co-pigment].

TABLE I

Effect of various co-pigments on the $\lambda_{max}$(nm) and absorbance* of a 10 ppm solution of cyanidin rutinoside in 0.01 M citric acid.

| co-pigment | 0 ppm | 20 ppm | 50 ppm | 100 ppm | 200 ppm | 500 ppm | 1000 ppm |
|---|---|---|---|---|---|---|---|
| 1. rutin | 512 | 512 | 513 | 513 | 514 | 518 | 523 |
| | (1.0) | (1.15) | (1.16) | (1.18) | (1.22) | (1.26) | (1.32) |
| 2. hydroxyethyl rutin | 512 | 513 | 514 | 516 | 518 | 523 | 528 |
| | (1.0) | (1.01) | (1.02) | (1.04) | (1.05) | (1.08) | (1.10) |
| 3. kaempferol-3-glucoside | 512 | 513 | 514 | 516 | 521 | 528 | 533 |
| | (1.0) | (1.01) | (1.01) | (1.04) | (1.06) | (1.08) | (1.10) |
| 4. quercetin O-sulfates | 512 | 513 | 514 | 516 | 520 | 526 | 530 |
| | (1.0) | (1.01) | (1.03) | (1.06) | (1.10) | (1.17) | (1.23) |
| 5. 4-methyl-umbelliferone sulfate | 512 | 512 | 512 | 512 | 513 | 516 | 519 |
| | (1.0) | (1.01) | (1.02) | (1.02) | (1.05) | (1.12) | (1.20) |
| 6. quercetin-5'-sulfonate | 512 | 517 | 525 | 532 | 535 | 544 | 550 |
| | (1.0) | (1.05) | (1.07) | (1.08) | (1.08) | (1.08) | (1.08) |
| 7. quercetin-5', 8- & 5', 6-di-sulfonate | 512 | 517 | 525 | 530 | 536 | 540 | 544 |
| | (1.0) | (1.07) | (1.12) | (1.16) | (1.19) | (1.19) | (1.20) |

TABLE I (contd.)

Effect of various co-pigments on the $\lambda_{max}$(nm) and absorbance* of a 10 ppm solution of cyanidin rutinoside in 0.01 M citric acid.

| co-pigment | 0 ppm | 20 ppm | 50 ppm | 100 ppm | 200 ppm | 500 ppm | 1000 ppm |
|---|---|---|---|---|---|---|---|
| 8. flavone mono-sulfonate | 512 (1.0) | 514 (1.02) | 517 (1.05) | 519 (1.10) | 522 (1.16) | 528 (1.27) | 535 (1.33) |
| 9. flavone di-sulfonate | 512 (1.0) | 512 (0.99) | 512 (0.99) | 514 (0.99) | 515 (0.98) | 517 (0.96) | 520 (0.91) |
| 10. 4'-methoxy-aurone mono- & di-sulfonates | 512 (1.0) | 514 (1.01) | 517 (1.03) | 524 (1.06) | 530 (1.10) | 538 (1.10) | 544 (1.09) |
| 11. flavonol mono- & di-sulfonates | 512 (1.0) | 513 (1.01) | 514 (1.02) | 516 (1.04) | 518 (1.08) | 522 (1.16) | 527 (1.23) |
| 12. morin di-sulfonate | 512 (1.0) | 512 (1.04) | 514 (1.08) | 516 (1.14) | 518 (1.23) | 523 (1.35) | 527 (1.43) |
| 13. xanthone mono- & di-sulfonates | 512 (1.0) | 512 (1.02) | 512 (1.02) | 514 (1.05) | 517 (1.11) | 522 (1.20) | 529 (1.26) |
| 14. N-methyl acridone mono- & di-sulfonates | 512 (1.0) | 513 (1.04) | 515 (1.09) | 519 (1.15) | 522 (1.21) | 527 (1.28) | 531 (1.28) |
| 15. biochanin A sulfonate | 512 (1.0) | 513 (1.02) | 514 (1.04) | 516 (1.07) | 519 (1.10) | 524 (1.14) | 527 (1.11) |
| 16. Anthraquinone mono- & di-sulfonates | 512 (1.0) | 512 (1.0) | 513 (1.02) | 514 (1.05) | 516 (1.10) | 521 (1.20) | 527 (1.31) |
| 17. Apigenin mono- & di-sulfonates | 512 (1.0) | 517 (1.06) | 525 (1.13) | 531 (1.18) | 536 (1.23) | 542 (1.26) | 546 (1.33) |
| 18. 4'-methoxy-flavone sulfonate | 512 (1.0) | 515 (1.03) | 518 (1.06) | 522 (1.11) | 528 (1.17) | 536 (1.23) | 543 (1.26) |

*Absorbance expressed as [Abs, with co-pigment]/[Abs, without pigment].

In addition to the co-pigments shown in Table I, 1000 ppm concentrations of the following compounds were tested as in Table I and found to exert no spectral shift greater than 5 nm on 10 ppm solutions of cyanidin rutinoside: Chromone sulfonate, Catechin sulfonate, Dehydroquercetin sulfonate, Bis-(p-methoxy-benzoyl) methane sulfonate, 4-Hydroxycoumarin sulfonate, 7-Hydroxy-coumarin sulfonate, Resorcinol sulfonate, p-Toluene sulfonic acid, Sulfosalicylic acid, Gallic acid, 4,4'-Dimethoxy-chalcone sulfonate, N-methylquinolone sulfonate.

Few, if any, naturally occurring flavonols are attractive for co-pigmentation studies because of their limited availability and/or limited water solubility. The most abundant flavonol, rutin (quercetin-3-rutinoside) (1), shows very poor solubility in water [130 ppm at room temperature—Krewson and Naghski, *J. Am. Pharm. Assoc., 41*, 582 (1952)]. More soluble flavonols such as kaempferol-3-glucoside (3) are not available in sufficient quantities to meet commercial scale needs.

Conversion of rutin to a water soluble derivative has been achieved previously by reaction with 2-chloroethanol and NaOH to give mainly the tri-hydroxyethyl derivative, mixed with some di- and tetrahydroxyethyl ethers. This mixture is generally known as hydroxyethylrutin (HER) (2). A sample of HER prepared by the Zyma procedure [British Patent No. 1,045,010] showed an effect very similar to that of rutin itself (Table I).

Quercetin, the aglycone of rutin, shows no co-pigmentation effect, presumably due to its extremely low solubility. Although hydroxyethylated quercetin has not been prepared, various sulfate esters have been. Quercetin-O-sulfates, i.e. a complex mixture of mono- di-, tri-, and tetrasulfate esters (4) prepared from quercetin and sulfamic acid by the method of Yamaguchi [*Nippon Kagaku Zasshi, 81* 1332 (1960); *Chem. Abs., 56,* 445], show a distinct co-pigment effect (Table I).

As shown in Table I, the co-pigments which show the greatest co-pigment effect are the polyhydroxy flavonol sulfonates. Instead of esterifying the flavonol OH groups, sulfonation involves nuclear substitution of the flavone with the $SO_3H$ group. Quercetin-5'-sulfonate (6) shows a co-pigmentation effect with cyanidin rutinoside at concentrations approximately 1/10 that at which rutin

# 0 024 731

or HER show equivalent effects. This superiority for the quercetin-5'-sulfonate can best be seen by comparing the data for each co-pigment at the 100 ppm level. (Table I).

Quercetin-5'-sulfonate has been described many times previously, primarily as a reagent for spectrophotometric analysis of zirconium, hafnium, uranium and other elements. It has also been suggested as an ingredient in suntan lotion. For many years it was thought to be the 8-isomer, however, the correct 5' sulfonate structure was recently determined by NMR [Terpilowski, et al., *Diss. Pharm. Pharmacol., 1970* (22), 389—93].

Although not quite as effective as quercetin-5'-sulfonate, quercetin-5',8-disulfonate (7) (which is prepared, along with some 5',6 disulfonate, as a by-product in the preparation of monosulfonate and isolated by prep HPLC) shows good co-pigment properties.

Each of these sulfonates, as well as others disclosed herein, are prepared by dissolving the parent compounds in a 50/50 mixture of conc. sulfuric acid and fuming sulfuric acid and allowing the mixture to stand at room temperature for approximately five minutes. The mixture is then poured into excess ice water and the solution neutralized with solid $CaCO_3$. The resulting $CaSO_4$ is removed by filtration and the filtrate passed through a strong cation exchange resin in the $Na^+$ form to remove excess $Ca^{++}$ ions. The eluent is then freeze-dried to yield the 40—60% pure sulfonate.

As shown by the date in Table I, several compounds in addition to flavanoids can function as co-pigments to enhance the color of foods containing anthocyanin pigments. It does not appear, however, that anyone has shown or suggested a solution to the more critical problem associated with anthocyanin pigments, i.e., how to reduce or eliminate the tendency of these pigments to fade when exposed to sunlight.

Summary

The present invention provides a photostable anthocyanic colorant composition consisting of an anthocyanic pigment in combination with a photoprotective agent selected from the group consisting of sulfonated polyhydroxyflavonols, poly(hydroxyalkyl)flavonols, sulfonated polyhydroxyflavones, sulfonated polyhydroxyiso-flavones, biochanin A sulfonate and 4'-methoxyaurone mono- and di-sulfonate said photoprotective agent being present in a molar concentration at least as great as the molar concentration of said anthocyanic pigment.

Detailed description of the invention

A complete understanding of the present invention, including its best mode of operation, will be gained by those skilled in the art from the following description and examples.

Example I

In order to test whether the color of anthocyanin-containing food products may be stabilized with respect to sunlight-induced fading through the use of photo-protective agent, several experimental beverages were prepared containing 30 ppm of the representative anthocyanin cyanidin rutinoside (the main pigment in cherries) and 850 ppm (40 molar excess) of kaempferol-3-glucoside (3). Beverages containing 30 ppm cyanidin rutinoside and no photoprotective agent were used as controls.

The experimental beverages were prepared from a syrup containing 2.0 kg water, 25 g citric acid, 2.5 kg sugar, and 40 g of commercial grape flavor. The syrup was diluted 4.4:1 with water, the colorant and co-pigment added, and the resulting beverage carbonated with two volumes of carbon dioxide. Standard flint glass bottles were used as containers. Sunlight exposure was measured with a broad spectrum Langley meter, with samples being removed periodically for analysis. Cyanidin rutinoside was determined by high pressure liquid chromatography using a Waters LC equipped with a Hewlett-Packard peak integrator and a $C_{18}$ micro Bondapak column. An eluent consisting of MeOH (15%), HOAc (5%) and water (80%) was used at a flow rate of 2.0 ml/min. All samples were pasteurized for 15 minutes before starting the experiment.

These beverages, both with and without photoprotective agent, were exposed to the conditions, and showed the effects, reported in Table II.

TABLE II

| Experimental conditions | Cyanidin rutinoside* | Cyanidin rutinoside* (30 p.p.m.) Kaempferol-3-glucoside (850 p.p.m.) |
|---|---|---|
| R.T. Sunlight | | |
| 0 Time | 100% | 100% |
| 565 Langleys | 74 | 85 |
| 1162 ,, | 41 | — |
| 1600 ,, | 28 | 78 |
| 2000 ,, | 19 | 75 |
| 5000 ,, | 0 | 42 |

4

TABLE II (contd.)

| Experimental conditions | Cyanidin rutinoside* | Cyanidin rutinoside* (30 p.p.m.) Kaempferol-3-glucoside (850 p.p.m.) |
|---|---|---|
| RT., Dark | | |
| 4 weeks | 88 | 92 |
| 8 weeks | 74 | 86 |
| 100°F, Dark | | |
| 2 weeks | 99 | 98 |
| 4 weeks | 77 | 79 |
| 8 weeks | 55 | 69 |

*Results expressed as % of Pigment Remaining according to the formula $([\text{Anthocyanin}]_t[\text{Anthocyanin}]_{t=o}) \times 100\%$.

From the results shown in Table II it is obvious that the use of the natural flavonol kaempferol-3-glucoside greatly enhances the resistance of cyanidin rutinoside to sunlight-induced fading. A slight enhancement of stability under ambient conditions is also observed.

In order to determine whether the synthetic flavone sulfonate quercetin-5'-sulfonate (6) would exhibit a photoprotective effect similar to that found for the natural flavonol kaempferol-3-glucoside, Example II was performed.

Example II

Model beverages were prepared as described in Example I with the concentration of anthocyanin and photoprotective agent as shown in Table III. Cyanidin rutinoside was determined by high pressure liquid chromatography using a Waters LC equipped with an HP peak integrator and a $C_{18}$ micro Bondpak column, and an eluent consisting of MeOH (15%), HOAc (5%), and water (80%). Eluent flow rate was 2.0 ml/min.

Enocianina (a grape skin colorant containing approximately 3% anthocyanin pigment) was analyzed by reading the absorbance value at the $\lambda_{max}$. All samples were pasteurized for 15 minutes at 80° before starting the experiment. The results are set forth in Table III.

TABLE III
Sunlight fading[1] of anthocyanins in a beverage matrix at pH 3.0

| | 20 ppm cyanidin rutinoside | 20 ppm cyanidin rutinoside + 100 ppm quercetin-5'-sulfonate | 375 ppm enocianina | 375 ppm enocianina + 100 ppm quercetin-5' sulfonate |
|---|---|---|---|---|
| Langleys[2] | | | | |
| 0 | 100 | 100 | 100 | 100 |
| 507 | | | 80 | 92 |
| 517 | 65 | 86 | | |
| 1012 | 48 | 74 | | |
| 1344 | | | 63 | 83 |
| 2005 | 38 | 70 | | |
| 2104 | | | 52 | 78 |
| 2901 | | | 42 | 73 |
| 3104 | 12 | 63 | | |
| 5010 | 0 | 47 | | |
| 5047 | | | 29 | 62 |

[1]Results expressed as % color remaining from 0 time. Values determined by absorbance at 520 nm.

$$\% \text{ Color Remaining} = \frac{\text{Abs}_t}{\text{Abs}_{t=o}} \times 100\%$$

[2]Expressed as Cal/cm²

5

Table III shows that quercetin-5'-sulfonate acts as a photoprotective agent for the representative anthocyanins cyanidin rutinoside and enocianina. Although used at a much lower concentration, the photoprotective effect of quercetin-5'-sulfonate is approximately the same as that of the natural flavonol, kaempferol-3-glucoside (Example I).

Since quercetin-5'-sulfonate exhibits a co-pigment effect as well as a photoprotective effect, and since, as shown in Table I, several hetrocyclic sulfonates show good co-pigment effects, Example III was performed to test whether certain of the species from Table I would inhibit sunlight fading of anthocyanin pigments.

Example III

The sulfonated hetrocycles listed in Table IV were prepared as described above.

The amount of each compound shown in Table IV was adjusted based on its purity so that each sample contained 500 ppm of pure sulfonate unless otherwise indicated. All solutions contained 20 ppm cyanidin rutinoside and 200 ppm sodium benzoate in 0.01 M citric acid. Samples were removed periodically, and the absorbance determined a the $\lambda_{max}$. Values represent percent color remaining. Table IV shows the results of this experiment.

TABLE IV
Effect of added co-pigments on the sunlight fading of cyanidin rutinoside.

| $\lambda$ max | Additive | Langleys (Cal/cm²) | | | | | | | |
|---|---|---|---|---|---|---|---|---|---|
| | | 0 | 46 | 103 | 193 | 298 | 666 | 1186 | 1631 |
| 512 | none | 100 | — | — | 90 | — | 63 | 36 | 19 |
| 535 | quercetin-5'-sulfonate* | 100 | — | — | 98 | — | 92 | 86 | 83 |
| 525 | morin di-sulfonate | 100 | — | — | 98 | — | 92 | 86 | 83 |
| 540 | 4'-methoxy aurone mono- & di-sulfonate | 100 | — | — | 94 | — | 80 | 65 | 56 |
| 525 | xanthone mono- & di-sulfonate | 100 | 14 | 1 | — | — | — | — | — |
| 530 | N-methyl acridone mono- & di-sulfonate | 100 | 13 | 1 | — | — | — | — | — |
| 517 | 4-methyl quinolone mono- & di-sulfonate | 100 | — | 8 | — | — | — | — | — |
| 517 | 4-methyl umbelliferone sulfate | 100 | — | 73 | 48 | 21 | 1 | — | — |
| 525 | anthroquinone mono- & di-sulfonate | 100 | — | 43 | 11 | — | — | — | — |
| 527 | biochanin A sulfonate | 100 | — | — | 97 | — | 81 | 67 | 59 |

*100 ppm

TABLE IV (contd.)
Effect of added co-pigments on the sunlight fading of cyanidin rutinoside.

| | | Langleys (Cal/cm²) | | | | | |
|---|---|---|---|---|---|---|---|
| $\lambda$max | Additive | 0 | 171 | 466 | 993 | 1275 | 1633 |
| 512 | none | 100 | 88 | 75 | 41 | 23 | 9 |
| 533 | quercetin disulfonate* | 100 | 98 | 96 | 88 | 86 | 80 |
| 533 | flavone monosulfo-nates | 100 | 19 | 1 | — | — | — |
| 530 | flavone di-sulfonates | 100 | 1 | — | — | — | — |
| 515 | catechin | 100 | 89 | 79 | 42 | 24 | 10 |
| 515 | gallic acid | 100 | 90 | 72 | 8 | — | — |
| 530 | hydroxyethyl rutin | 100 | 95 | 91 | 79 | 71 | 64 |
| 530 | quercetin-O-sulfates | 100 | 94 | 86 | 67 | 55 | 47 |
| 515 | dihydro-quercetin | 100 | 97 | 86 | 50 | 29 | 15 |

*100 ppm

| | | Langleys (Cal/cm²) | | | | | |
|---|---|---|---|---|---|---|---|
| $\lambda$ max | Additive | 0 | 212 | 533 | 754 | 1168 | 1629 |
| 512 | none | 100 | 82 | 58 | 46 | 24 | 10 |
| 535 | 4'-methoxy flavone sulfonate | 100 | 10 | — | — | — | — |
| 532 | apigenin sulfonates | 100 | 89 | 78 | 74 | 63 | 51 |
| 525 | flavone di-sulfonates | 100 | 1 | — | — | — | — |

*100 ppm

The results shown in Table IV demonstrate that only certain of the compounds which exhibit a co-pigment effect (see Table I) also exhibit a photoprotective effect, and that, in fact, several of the compounds exhibiting co-pigment effects enhanced rather than reduced the photodegradation of cyanidin rutinoside. Those co-pigment species showing promising photoprotective effects are hydroxyethylrutin (2) [a poly(hydroxyalkyl)flavonol]. quercetin disulfonate (7), quercetin-5'-sulfonate (6) and morin disulfonate (12) [polyhydroxyflavonol sulfonates], biochanin A sulfonate and 4'-methoxyaurone disulfonate (10) [aurone sulfonates], and apigenin sulfonates (17) [polyhydroxy flavone sulfonates]. Among the remaining co-pigments tested in Example III, quercetin-O-sulfates (4) exhibited a somewhat lower degree of photoprotective effect, and certain other co-pigments including flavone monosulfonate (8), flavone disulfonate (9) and 4'-methoxyflavone sulfonate (18), actually increased the rate of photodecomposition of cyanidin rutinoside.

As used in the generic terms given above, the term "polyhydroxy" is defined to mean at least two and not more than five hydroxyl substituents on the aromatic rings of the individual species. Also, as used above, the term poly(hydroxyalkyl)" is defined to mean not less than two or more than four hydroxyethyl or hydroxypropyl substituents on the aromatic rings of the individual species.

The results of Example III indicate several surprising aspects of the interaction between anthocyanin pigments and co-pigments. Foremost among these is the finding that all co-pigments are not necessarily photoprotective agents, and, in fact, sometimes enhance photodegradation. The second aspect shown by Example III is that the mere presence of a sulfonate group in a co-pigment does not necessarily indicate that the sulfonated co-pigment will be a photoprotective agent. Thus, the polyhydroxyflavonol sulfonate, quercetin-5'-sulfonate (6), and the non-sulfonated poly(hydroxyalkyl)-flavonol, hydroxyethylrutin (2), are each both a co-pigment and a photoprotective agent, whereas both

7

flavone mono- (8) and di-sulfonate (9) are co-pigments but actually promote photodecomposition. Thus the mere presence of a sulfonate group in a co-pigment does not appear to insure photoprotective capability in a co-pigment. Third, and finally, although certain of the co-pigments which show photo-protective capabilities are antioxidants, i.e. quercetin-5'-sulfonate (6), other species which are also anti-oxidants either show no photoprotective effect (catechin and dihydroquercetin) or actually increase the rate of photodegradation (gallic acid).

From the foregoing discussion of the results shown in Table IV, it is apparent that, among those generic classes tested, sulfonated polyhydroxyflavonols, poly(hydroxyalkyl)flavonols, sulfonated polyhydroxyflavones, sulfonated polyhydroxyiso-flavones, biochanin A sulfonate and 4'-methoxyaurone mono- and di-sulfonate will act as both co-pigments and photoprotective agents.

In order to ensure that the photoprotective effect, like the co-pigment effect, actually results from a molecular interaction and is not merely a "screening effect", i.e. where the co-pigment absorbs that portion of sunlight which causes photodecomposition, Example IV was performed.

Example IV

Three separate test mixtures were prepared in 0.01 M citric acid solution containing 200 ppm sodium benzonate as preservative. Mixture A contained 20 ppm cyanidin rutinoside, Mixture B contained 20 ppm cyanidin rutinoside and 100 ppm quercetin-5'-sulfonate (Q.S.), and Mixture C contained 15 ppm quercetin-5'-sulfonate only.

Mixture A and B were placed in 30 ml test tubes which were suspended in 250 ml wide mouth Erlenmeyer flasks containing 210 ml. of water. A second sample of mixture A was placed in a 30 ml. test tube and suspended in a 250 ml. wide-mouth flask containing 210 ml. of Mixture C. The three resulting samples are referred to as 1) cyanidin rutinoside control, 2) cyanidin rutinoside+quercetin-5'-sulfonate (Q.S.) internal and 3) cyanidin rutinoside+quercetin-5'-sulfonate (Q.S.) external. The total quantity of quercetin-5'-sulfonate used was the same in samples two and three.

The flasks containing the test tubes were then exposed to sunlight and samples removed periodically for analysis at the $\lambda_{max}$. The results are presented in Table V as percent color remaining defined as $Abs_t/Abs_{t=0} \times 100\%$.

TABLE V

| Langleys | Cyanidin rutino-side control | Cyanidin rutino-side+Q.S. internal | Cyanidin rutinoside +Q.S. external |
|---|---|---|---|
| 0 | 100 | 100 | 100 |
| 207 | 84 | 95 | 88 |
| 376 | 65 | 92 | 76 |
| 589 | 38 | 83 | 56 |
| 910 | 18 | 72 | 36 |
| 1128 | 9 | 67 | 26 |

The results shown in Table V demonstrate that the photoprotective effect of quercetin-5'-sulfonate toward cyanidin rutinoside is not merely a "screening effect", and tend to prove that the photoprotective effect demonstrated in Table IV is dependant on a molecular interaction between photoprotective agent and anthocyanin colorant.

This interaction is particularly strong in the case of the yellow 3-deoxyanthocyanidins such as apigenidin chloride. In fact, when a solution of 10 ppm apigenidin chloride and 100 ppm quercetin-5'-sulfonate in 0.01 M citric acid is allowed to stand overnight at room temperature, a portion of the colorant and the co-pigment begins to precipitate as a 1:1 complex. Despite the precipitate formation, a significant amount of the anthocyanidin pigment color remains in solution along with a significant amount of the 5'-sulfonate.

In instances such as this, the solubility limits will be such as to restrict the molar excess of photo-protective agent over pigment which can be used, although sufficient photoprotective agent may still be used to provide an adequate level of photoprotection. In extreme instances, the solubility limits may be so low as to allow insufficient concentrations of pigment and photoprotective agents to be used. In these instances the invention will be nonetheless operative, but achieving optimum levels of color may require the addition of an additional solvent, such as alcohol or polyol, to the aqueous solution, in order to increase the solubility of the complex.

The photoprotective effect of (the uncharged) hydroxyethylrutin on the representative 3-deoxyanthocyanidin apigenidin chloride is shown in Example V.

Example V

Samples were prepared in 0.01 M citric acid containing 200 ppm sodium benzoate as preservative. Apigenidin chloride was used at 20 ppm and hydroxyethylrutin at 100 ppm. Samples were stored in 100 ml. volumetric flasks and exposed to direct sunlight. Aliquots were removed periodically and the absorbance measured at the $\lambda_{max}$.

8

The results are summarized in Table VI, values of percent color remaining determined as $[Abs_t/Abs_{t=o}] \times 100\%$.

TABLE VI

| Sample | Langleys langleys | | | | | |
| --- | --- | --- | --- | --- | --- | --- |
| | 0 | 774 | 1317 | 2374 | 3365 | 4341 |
| Apigenidin Chloride | 100 | 100 | 96 | 75 | 46 | 20 |
| Apigenidin+Hydroxy-ethylrutin | 100 | 100 | 100 | 97 | 92 | 86 |

From the foregoing disclosure, those skilled in the art will appreciate that a photostable colorant composition suitable for use in mixtures, especially foods, may be produced by combining one or more anthocyanic pigments, i.e. anthocyanins or anthocyanidins, with one or more photoprotective agents. Such a photostable colorant composition, as shown by Example IV, above, is more than a mere aggregation of individual species. Such a composition exhibits enhanced photostability greater than that which would be produced if the anthocyanin and the photoprotective agent had no molecular interaction, i.e. if the photostability resulted only due to a "screening effect". Yet the ability to separate the pigment from the photoprotective agent, i.e. by HPLC, indicates that no permanent molecular transformation in either species has been made. Thus, the present invention embraces the photostable colorant composition, and a food product containing the photostable colorant composition.

While the majority of the Examples described above utilize approximately a 5:1 molar ratio of photoprotective agent to anthocyanic pigment, it does not appear that there is either an upper or a lower limit on the useful range of this ratio. For practical reasons, a broad range of photoprotective agent: anthocyanic pigment molar ratios of from about 1:1 to about 20:1 may be used. A ratio of from about 2:1 to about 10:1 is preferred and a ratio of about 5:1 is optimum from a cost/benefit perspective.

The novel food product of this invention may take several alternative forms. The food may be in dry form such as a beverage powder, or the like, which is adapted for dissolution in water. The food product may also be a water-based concentrate or syrup which is adapted for dilution with water to produce a single strength beverage. Finally, the food product may be a single strength beverage. In general the novel food composition of this invention will comprise an anthocyanic pigment, a photoprotective agent, a food base, i.e. a combination of all ingredients of the finished food save the anthocyanic pigment and the photoprotective agent, and optionally an acidulant, preferably citric acid or phosphoric acid.

As those skilled in the art will readily appreciate, the utility of the present invention resides in enabling one to produce an anthocyanic colorant composition which photodegrades at a significantly slower rate than does the anthocyanic pigment by itself. Such utility in a food product will be of little advantage if the food product contains other ingredients, or is exposed to conditions, which tend to destroy either the anthocyanic pigment or the photoprotective agent. Thus neither the colorant composition nor the food product of this invention should be exposed to elevated temperature of pH's sufficient to degrade either the anthocyanic pigment or the photoprotective agent, nor should the food product contain ingredients, such as ascorbic acid, which tend to react with and decolorize, the anthocyanic pigment. This is not to say that such factors would necessarily interfere with, or eliminate, the photoprotective effect disclosed herein, but rather than protection from photodegradation may be futile if reactive degradation is allowed to prevail.

**Claims**

1. A photostable anthocyanic colorant composition consisting of an anthocyanic pigment in combination with a photoprotective agent selected from the group consisting of sulfonated polyhydroxyflavonols, poly(hydroxyalkyl)flavonols, sulfonated polyhydroxyflavones, sulfonated polyhydroxyiso-flavones, biochanin A sulfonate and 4'-methoxyaurone mono- and di-sulfonate said photoprotective agent being present in a molar concentration at least as great as the molar concentration of said anthocyanic pigment.

2. The composition as set forth in claim 1 wherein said photoprotective agent is selected from the group consisting of hydroxyethylrutin, apigenin sulfonate, quercetin-5'-sulfonate, quercetin disulfonate and morin disulfonate.

3. The composition as set forth in claim 2 wherein said anthocyanic pigment is selected from the group consisting of cyanidin rutinoside, grapeskin colorant and apigenidin chloride.

4. The composition as set forth in claim 3 wherein the photoprotective agent is hydroxyethylrutin or quercetin-5'-sulfonate and additionally containing an acidulant, preferably citric acid or phosphoric acid.

5. The composition as set forth in claim 4 wherein said anthocyanic pigment is cyanidin rutinoside and said photoprotective agent is hydroxyethylrutin.

6. The composition as set forth in claim 5 the molar ratio of said hydroxyethylrutin to said cyanidin rutinoside is five to one.

7. The composition as set forth in claim 1 wherein said photoprotective agent is a poly(hydroxyalkyl)flavonol, preferably hydroxyethylrutin, and said anthocyanic pigment is a 3-deoxyanthocyanidin, preferably apigenidin chloride.

8. Use of the composition as set forth in claim 1 together with a food base in a food composition.

9. Use as set forth in claim 8 wherein the food composition is a substantially dry powder, a beverage syrup or concentrate or a single strength beverage.

10. Use as set forth in claim 8 wherein the photoprotective agent is selected from the group consisting of hydroxyethylrutin, apigenin sulfonate, quercetin-5'-sulfonate, quercetin disulfonate and morin disulfonate.

11. Use as set forth in claim 10 wherein the composition additionally comprises an acidulant selected from the group consisting of citric acid and phosphoric acid.

**Patentansprüche**

1. Lichtstabile Anthocyan-Farbzusammensetzung, bestehend aus einem Anthocyanpigment in Kombination mit einem Lichtschutzmittel, ausgewählt aus der Gruppe von sulfonierten Polyhydroxyflavonolen, Poly(hydroxyalkyl)flavonolen, sulfonierten Polyhydroxyflavonen, sulfonierten Polyhydroxyisoflavonen, Biochanin-A-sulfonat und 4'-Methoxyauronmono- und -disulfonat, wobei das Lichtschutzmittel in einer molaren Konzentration vorliegt, die zumindest so gross ist wie die molare Konzentration des Anthocyanpigments.

2. Zusammensetzung nach Anspruch 1, in der das Lichtschutzmittel ausgewählt ist aus der Gruppe von Hydroxyäthylrutin, Apigeninsulfonat, Quercetin-5'-sulfonat, Quercetindisulfonat und Morindisulfonat.

3. Zusammensetzung nach Anspruch 2, worin das Anthocyanpigment ausgewählt ist aus der Gruppe von Cyanidinrutinosid, Grapeskinfarbstoff und Apigenidinchlorid.

4. Zusammensetzung nach Anspruch 3, in der das Lichtschutzmittel Hydroxyäthylrutin oder Quercetin-5'-sulfonat ist und zusätzlich ein ansäuerndes Mittel, vorzugsweise Zitronensäure oder Phosphorsäure, enthält.

5. Zusammensetzung nach Anspruch 4, in der das Anthocyanpigment Cyanidinrutinosid ist und das Lichtschutzmittel Hydroxyäthylrutin ist.

6. Zusammensetzung nach Anspruch 5, worin das Molverhältnis des Hydroxyäthylrutins zum Cyanidinrutinosid 5 zu 1 beträgt.

7. Zusammensetzung nach Anspruch 1, in der das Lichtschutzmittel ein Poly(hydroxyalkyl)-flavonol, vorzugsweise Hydroxyäthylrutin, ist und das Anthocyanpigment ein 3-Desoxyanthocyanidin, vorzugsweise Apigenidinchlorid ist.

8. Verwendung der Zusammensetzung nach Anspruch 1 zusammen mit einer Nahrungsmittelbasis in einer Nahrungsmittelzusammensetzung.

9. Verwendung nach Anspruch 8, in der die Nahrungsmittelzusammensetzung ein im wesentlichen trockenes Pulver, ein Getränkesirup oder -konzentrat oder ein Getränk trinkfertiger Konzentration ist.

10. Verwendung nach Anspruch 8, in der das Lichtschutzmittel ausgewählt ist aus der Gruppe von Hydroxyäthylrutin, Apigeninsulfonat, Quercetin-5'-sulfonat, Quercetindisulfonat und Morindisulfonat.

11. Verwendung nach Anspruch 10, worin die Zusammensetzung zusätzlich ein ansäuerndes Mittel, ausgewählt aus der Gruppe von Zitronensäure und Phosphorsäure, enthält.

**Revendications**

1. Composition d'un colorant anthocyanique stable à la lumière comprenant un pigment anthocyanique associé avec un agent photoprotecteur choisi parmi des polyhydroxyflavonols sulfonés, des poly(hydroxyalkyl)-flavonols, des polyhydroxyflavones sulfonées, des polyhydroxy-iso-flavones sulfonées, le sulfonate de biochanine A et le monosulfonate et le disulfonate de 4'-méthoxyaurone, composition dans lequelle cet agent photoprotecteur est à une concentration molaire au moins égale à celle du pigment anthocyanique.

2. Composition selon la revendication 1, dan-laquelle l'agent photoprotecteur est choisi parmi l'hydroxyéthylrutine, le sulfonate d'apigénine, le 5'-sulfonate de quercétine, le disulfonate de quercétine et le disulfonate de morine.

3. Composition selon la revendication 2, dans laquelle le pigment anthocyanique est choisi parmi le rutinoside de cyanidine, un colorant de grapeskine et le chlorure d'apigénidine.

4. Composition selon la revendication 3, dans laquelle l'agent photoprotecteur est l'hydroxyéthyl-

**0 024 731**

rutine ou le 5'-sulfonate de quercétine et qui contient en plus un corps acidifiant, de préférence l'acide citrique ou l'acide phosphorique.

5. Composition selon la revendication 4, dans laquelle le pigment anthocyanique est le rutinoside de cyanidine et l'agent photoprotecteur est l'hydroxyéthylrutine.

6. Composition selon la revendication 5, dans laquelle le rapport molaire de l'hydroxyéthylrutine au rutinoside de cyanidine est de 5 à 1.

7. Composition selon la revendication 1, dans laquelle l'agent photoprotecteur est un poly-(hydroxyalkyl)flavonol, de préférence l'hydroxyéthylrutine, et le pigment anthocyanique est une 3-désoxyanthocyanidine, de préférence le chlorure d'apigénidine.

8. L'utilisation d'une composition selon l'une quelconque des revendications précédentes avec un aliment de base dans un produit alimentaire.

9. Utilisation selon la revendication 8, dans laquelle le produit alimentaire est un produit en poudre sèche, une boisson sirupeuse, ou bien un concentré ou une boisson à concentration unique (c'est-à-dire une boisson à consommer telle quelle, sans dilution).

10. Utilisation selon la revendication 8, dans laquelle l'agent photoprotecteur est choisi parmi l'hydroxyéthylrutine, le sulfonate d'apigénine, le 5'-sulfonate de quercétine, le disulfonate de quercétine et le disulfonate de morine.

11. Utilisation selon la revendication 10, dans laquelle la composition comprend en outre un corps acidifiant choisi parmi l'acide citrique et l'acide phosphorique.

11